# EUROPEAN PATENT APPLICATION

(11) **EP 2 533 177 A1**
(43) Date of publication of application: **12.12.2012**
(21) Application number: 11169015.2
(22) Date of filing: 07.06.2011
(51) Int. Cl.: G06Q 10/00, G06Q 30/00

(54) **Application ratings based on performance metrics**

(71) Applicant: Research In Motion Limited, Waterloo, ON N2L 3W8 (CA)
(72) Inventor: Abbott, Tyler Ronald William, Waterloo, Ontario N2L 3W8 (CA)
(74) Representative: Patel, Binesh

(57) **Abstract**

Application portals enable a unified interface to be provided for users to select application for download and purchase to their devices. User rankings and reviews are common place but do not provide insight on the performance of an application on a particular device type. To improve the application experience additional metrics associated with the performance of an application can be provided to the user prior to download to provide real performance metrics received from individual devices that have already executed the application on a similar device type. The performance metrics can be presented to a user or developer and in a more informative ranking for an application, one based on performance rather than popularity.

## Description

### TECHNICAL FIELD

The present disclosure relates to applications executed on devices and in particular to rating the performance of the applications.

### BACKGROUND

When downloading a software application to a device such as portable or mobile devices where resources are limited, there is no way to know the quality of an application and the potential impact on the overall operation of the device prior to downloading an application other than by user ranking presented. User ranking is typically provided by application portals that provide a centralized application store or access point hosting a range of applications for download. Users can submit ratings or reviews for applications in terms of a descriptive review or a visual rating, such as 2 out of 5 stars, to provide an indication of user's satisfaction with the application or a 'popularity' rating. The resulting ratings can be very subjective and may not be based on just the quality or content of the application but may be influenced by other factors related to performance of the application execution on a particular device. Hardware and processing constraints of a device may impact the overall user experience positively or negatively and not be equally applicable to all potential users. In addition poorly implemented applications can have an impact on device performance, data usage and battery life which may not be easily accounted for in a satisfaction rating or apparent to potential users of the application. The user rating or review criteria may not accurately reflect the experience that a potential user will have on their particular device. Accordingly, an improved application rating remains highly desirable.

### SUMMARY

In accordance with an aspect of the present disclosure there is provided a method of generating application ratings at an application portal, the method when executed by a processor comprising: receiving from a plurality of devices performance metrics associated with an application executed on each of the plurality of devices; determining a device type associated with each of the plurality of devices that sent the performance metrics to the application portal; and storing the received performance metrics based upon the determined device type identified in relation to the application.

In accordance with another aspect of the present disclosure there is provided a system for application ratings, the system comprising: a plurality of devices coupled to a network each executing an application; an application portal coupled to the network for: receiving performance metrics for the application from each of the plurality of devices; determining a device type associated with each of the plurality of devices that sent the performance metrics to the application portal; and storing the received performance metrics by an associated device type identified in relation to the application.

In accordance with yet another aspect of the present disclosure there is provided a computer readable memory comprising instructions which when executed by a processor perform: receiving from a plurality of devices performance metrics associated with an application executed on each of the plurality of devices; determining a device type associated with each of the plurality of devices that sent the performance metrics to the application portal; and storing the received performance metrics based upon the determined device type identified in relation to the application.

### BRIEF DESCRIPTION OF THE DRAWINGS

Further features and advantages of the present disclosure will become apparent from the following detailed description, taken in combination with the appended drawings, in which:
Figure 1 shows a representation of a system for application ratings based upon performance metrics;
Figure 2 shows an illustration of an application download view;
Figure 3 shows a schematic representation of developer application performance view;
Figure 4 shows a method of application ratings based upon performance metrics;
Figure 5 shows a method of performance metric collection and presentation at an application portal; and
Figure 6 shows a method of performance metric generation performed at a device.

It will be noted that throughout the appended drawings, like features are identified by like reference numerals.

### DETAILED DESCRIPTION

Embodiments are described below, by way of example only, with reference to the figures.

Application portals provide a central repository for users to find and download applications for their devices, such as a personal computers, mobile device, netbook, laptop, tablet or any device that allows software applications to be downloaded an executed. A user can browse applications and can typically view a description of the application, screenshots and user reviews of the application prior to downloading and/or buying the application. User reviews are submitted by individual users to provide a rating of the application, for example 4 out of 5 stars. Descriptive reviews can also be submitted but are generally of more limited value due to the potential number of reviews and the potentially subjective nature of the reviews. The user reviews are averaged to provide an overall rating that is presented to provide potential users a relative indication of general user satisfaction with the application. Individual reviews and scores are typically available however the number can be significant and it can be difficult to discern which reviews are accurate. However, as the combinations of possible device hardware and operating systems that the application may be executed on grows the user ratings can provide limited insight into the actual performance of an application on a particular device which may have an impact on a user's decision to download and/or purchase the applications. In addition a developer of an application may not easily comprehend the impact of device hardware and software performance on an application as testing the application on a vast array of devices may not be practical.

To improve the application experience metrics associated with the performance of an application can be provided to the user prior to download and developer through collection and display of 'real-life' performance metrics received from individual devices. The operating system (OS), a service or an application itself can provide metric data on application performance which can be used to enable 3rd party applications to be monitored continuously or polled to determine performance. Metrics related to processor, memory, graphics and network traffic usage can be determined and associated with an application being executed on the device. For example metrics such as but not limited to average frames per second providing a value for the average number of times an application paints to the screen per second while the application is in the foreground and has input focus, central processing unit (CPU) usage providing a value for the average number of seconds of the CPU's time the application uses per day, average memory usage providing a value for the average amount of memory in bytes an application uses during its time running which can be averaged over multiple application open/close lifetimes, maximum memory usage providing a value for the maximum amount of memory the application has used during its runtime, storage usage providing a value for the number of bytes the application created on the persistent memory/storage per day, data usage providing the number of bytes of network traffic the application used with its wireless data connection such as cellular or Wi-Fi connections per day, week or month, and application usage providing the average number of seconds the application is in the foreground and has input focus per day.

This data can be collected and compiled into a more informative ranking for an application, one based on performance rather than popularity. The data is provided in terms of a metrics defining a measure of some property of a piece of performance of the software application.

Metrics received at an application portal from many devices of the same type can be averaged from many devices in order to create a concise view of how well the application runs on a particular device. The data is collected on the device and uploaded anonymously to the application portal (or some other server for storage/processing). Some additional information such as the device model and current operating system, version or code bundle can be used for proper classification of the metric data for both the end user and developer.

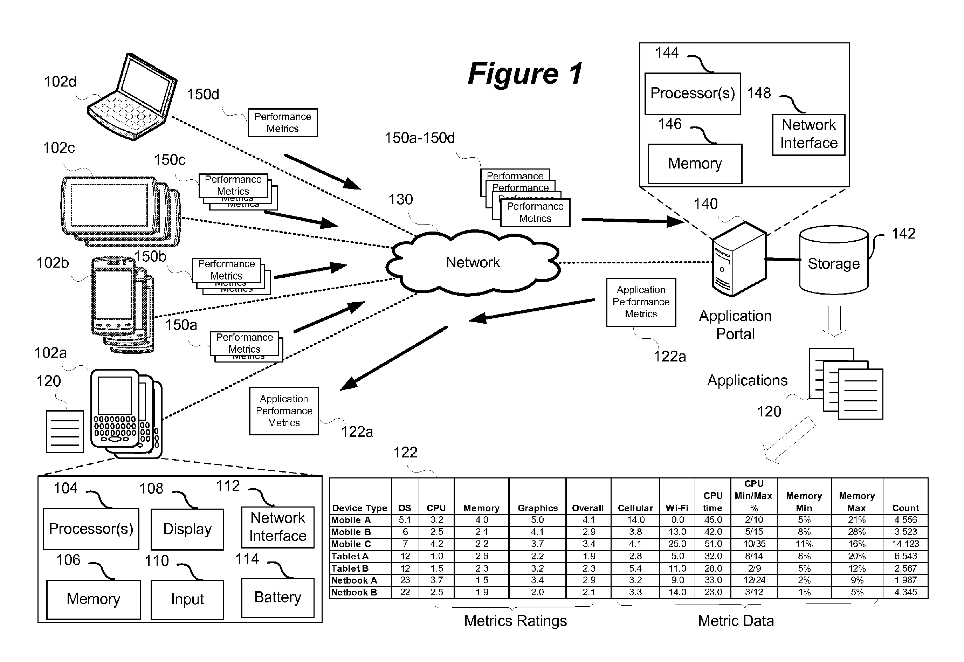

Figure 1 shows a representation of a system for application ratings based upon performance metrics. Devices 102a-102d each comprise one or more processors 104, memory 106 for storing application 120 to executed by the processor, display 108, input device 110 such as a keyboard or touch screen, a network interface 112 to communicate through network 130 to the application server 140 and, in portable device, a battery 114. During execution of the respective application 120 the devices 102a-102d provide performance metrics 150a-150d to the application portal 140. The performance metric data related to aspects of the processor, memory, graphics or network traffic usage or performance, and/or performance metric ratings, are provided to the application portal 140. Each device can also identify a device type such as a manufacturer identifier and model identifier, an operating system version and other configuration options such as total memory available if it is expandable and would impact the reported values. The application portal 140 can locally store the collected information or store the information in a networked storage device 142. The application portal comprises one or more processors 144 for executing instructions stored in memory 146. A network interface 148 enables communication with the network 130 and may remote storage 142. External storage may be directly coupled to the application portal 140 through an input/output interface. The application portal functionality may reside in a server, or may be provided by multiple servers, or distributed cloud processing. For each application 120 metric information 122can be stored identifying device type and configuration information against associated performance metrics that are collected. The metric information 122 may be stored as original metric data values and/or metric ratings computer based upon the metric data or provided by the device.

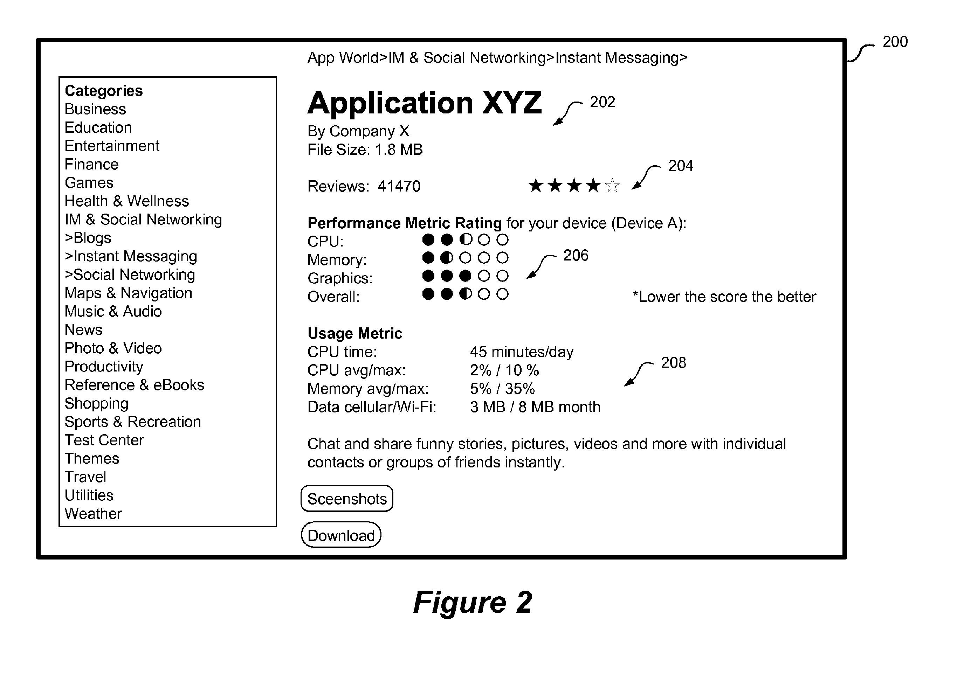

Figure 2 shows of an example application download view 200 provided by the application portal illustrating the presentation of metrics that would be viewed by a user. The application download view 200 can present information on the device 102 to aid the user in the selection and downloading of an application for execution on the device. The content and format of the application download view 200 may vary based upon the particular implementation and the amount of information desired to be presented to the user. The application 202 that the user is browsing to on their device 120a-120d is identified and presented with user ratings 204, performance metrics 206. The user reviews 204 and performance metrics 206 can be presented as a value or in a graphical rating scale to show an average rating value. The rating scale may comprise a number of icons or bars to identify a relative value being identified for example 4 out of 5. The application portal determines the type of device requesting the application download view and determines the performance metric information 206 associated with the type of device. The display metrics 206 of the device presents information directly relevant to performance characteristics of the device and aid the user in determining if they should download and install the application. The performance metrics 206 may comprise but not be limited to CPU, memory, graphics, network traffic data metrics in addition to composite metrics which may be based upon a combination of one or more parameters. An overall average performance metric rating may also be presented which may comprise and average or weighted average of one or more performance metrics. In this example the graphical rating scale identifies that a lower metric value indicates more preferable performance characteristics however it should be apparent that the display may alternatively be presented from a high to low rating or as an absolute value or a scaled value. Performance metrics may also be displayed as data values 208 such as for example CPU usage, memory usage, and network traffic generated for different communication information provided utilized by the device. Maximum, minimum or average values over a range of time periods may be presented based upon the metric data collected. The units of the values may vary based upon how the application operates and the resources available to the device or the type of network that the device interfaces with. For example high bandwidth application that are infrequently used may show bandwidth requirements based on a daily value rather than a monthly value or may be presented based upon a type of data plan associated with the type of device. By presenting the performance metrics based upon the particular type of device that the user is accessing the application portal, the user can make an assessment of the impact of the application on their particular device. For example a highly rated application may perform poorly, or consume considerable bandwidth on a particular device and while it may be rated highly the user experience on the device may be poor.

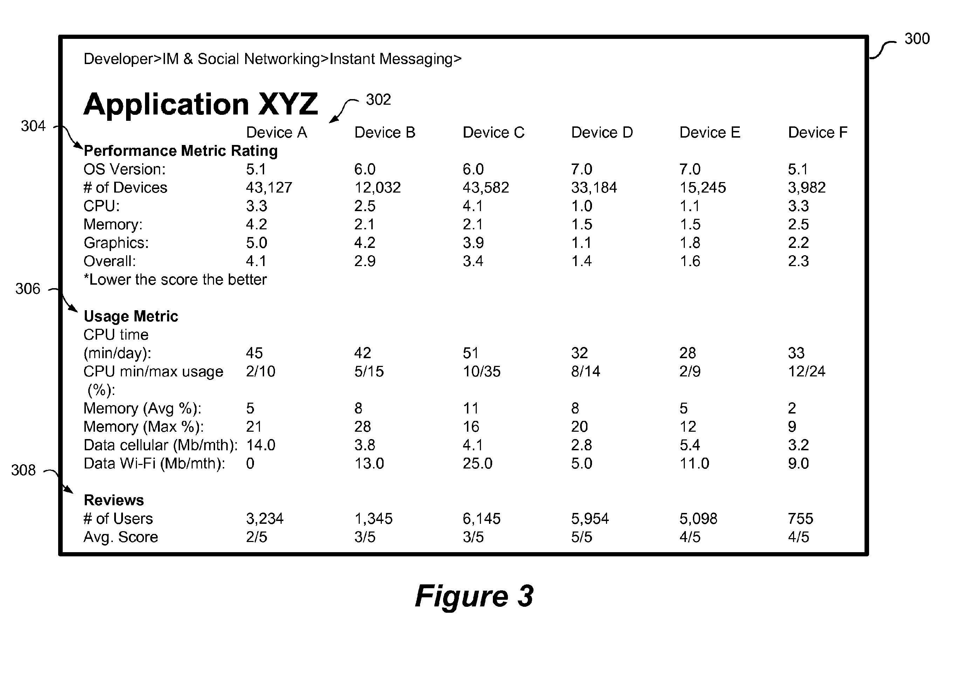

Figure 3 shows a schematic representation of developer application performance view 300. The developer application performance view 300 enables a developer to view the data collected across multiple device types and determine the impact of each unique device configuration associated with a device type on the application performance and vice versa. This feature enables developers to identify problematic device types. The application 302 is identified and the performance metrics 304 for multiple devices can be presented in a number of formats, for example a table type format. Some of the metrics that may be displayed are for example the operating system (OS) version of the device, # of devices for the particular model/OS that have reported metrics, CPU, memory, graphics and an overall or average rating. Additional details may also be presented in varying formats such as by charts or detailed tables based upon particular implementations. The metrics may be presented as a scaled or relative performance metric 304 values or also as metric data 306 such as for example CPU time (minutes/day), CPU minimum/maximum usage (%), memory (average %), memory (maximum %), data cellular (megabytes/month), data Wi-Fi (megabytes/month) or other measureable performance metric data. Alternative performance metric ranges or values may be presented. The users reviews 308 can also be presented but may also be categorized in relation to device type if information is determined when the reviews are submitted as well to provide further granularity to allow the developer to correlate the hardware/software configuration to application performance.

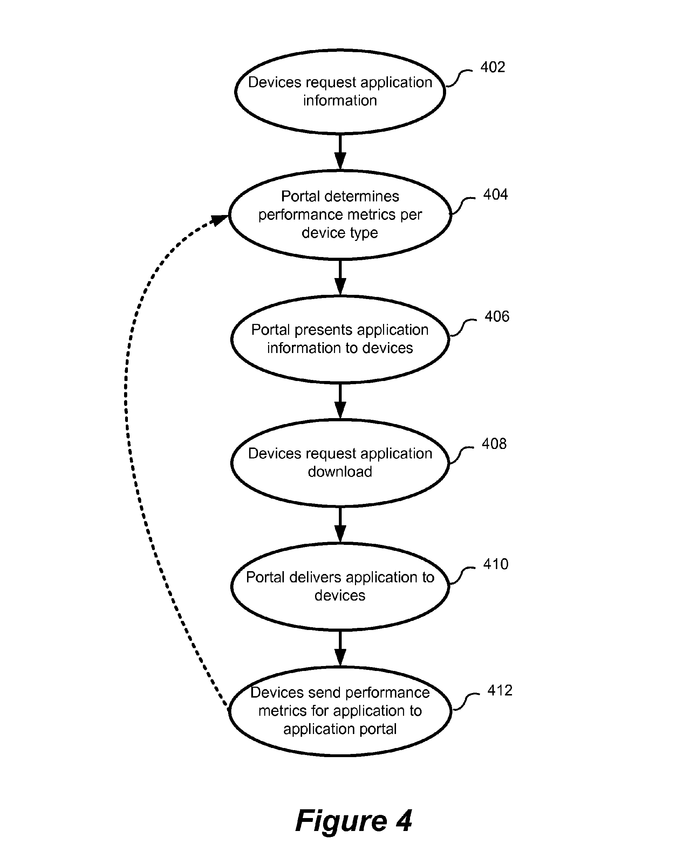

Figure 4 shows a method of application ratings based upon performance metrics. A device 102a requests application information (402) from an application portal 140 to display on the device. The application portal 140 determines performance metrics 122 associated with the particular device type 102a (404) of the device and presents application information to device (406) as part of the application information presented on the display providing metric ratings and or metric data to the user. The device 102a then requests the application 120 to be downloaded (408), assuming the user initiated downloading of the application 120 the application portal 140 then delivers the application 120 to device 102a (410) via the network 130. Once the application 120 is installed on devices 102a-102d and assuming the users have selected to submit performance metrics 122a to the application portal 130, the devices 102a-102d sends performance metrics 150a for the application 120 (412) to the application portal 130 at a defined periodic interval as long as the application is installed on the device 102a. By receiving performance metrics from many devices an accurate performance metric score can be generated and categorized by device type. The device type may be associated with one or more parameters used to characterize device types into groups. The parameters used to define the device type group may for example be defined by manufacturer, model, revision, and software or bundle version.

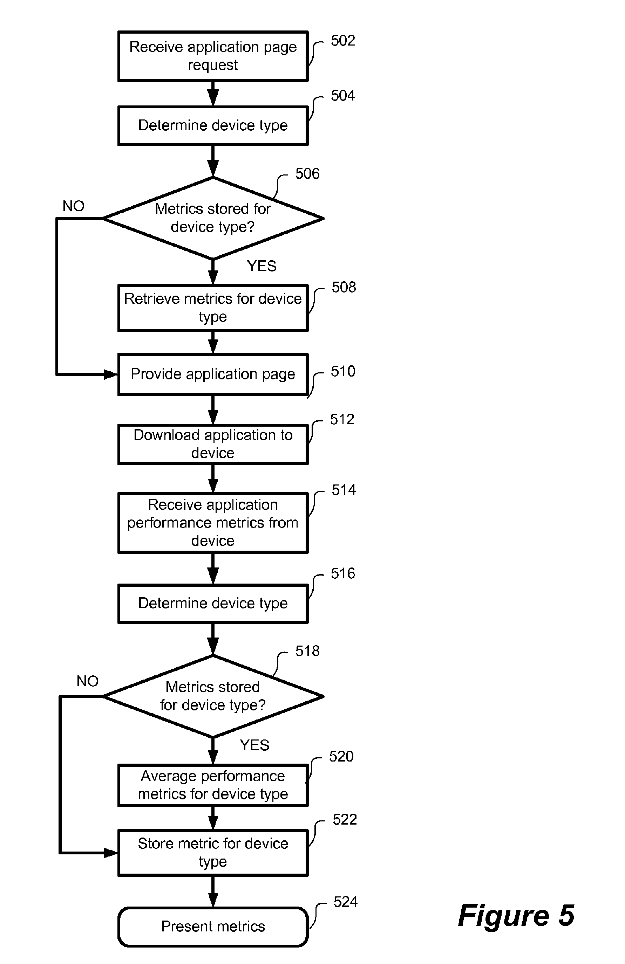

Figure 5 shows a method of performance metric collection and presentation at the application portal. The method is executed by one or more processors of the application portal from instructions stored in a computer readable memory. An application view request is received (502) at the application portal 140 from a device 120a-102d coupled to the network 130. The application portal 140 determines device type (504), either by information provided in the application view request directly, by a look-up to a database using a device or user identifier provided in the request, or through a query mechanism with the device 120a-102d. If metrics have been collected and previously stored for the device type (Yes at 506), the performance metrics are retrieved (508) and presented in an application view or are provided to generate an application view at the device (510). The portal may retrieve performance metric ratings if previously determined and stored, retrieve metric data and compute metric ratings and present metric ratings and/or metric data in the application or developer views. If performance metrics are not stored for the particular device type (No at 506), the application view is provided (510) either with no performance metrics for the device or an aggregate of performance metrics that have been collected but are not specific to the device type. If the user requests to download the application, a download procedure is commenced between the device and the application portal, or a storage location associated with the application (512).

Once the application is installed on the device, the device or application can be configured to provide application performance metrics on a periodic basis back to the application portal 140. The performance metrics, ratings and/or data, may be provided with a device type identifier, device identifier, or a user identifier based upon the permissions available and level of acceptable information that can be provided to identify the device type. While the application is resident on the device the application performance metrics 122a are received by the application portal (514). From the performance metrics the associated device type is determined (516) either by being provided with the performance metrics or by a lookup of an identifier provided with the performance metrics. If performance metrics have been previously stored for the device type (Yes at 518), the received performance metric information can be averaged by device type (520) and stored (520). If performance metrics have not been previously stored for the device type (No at 518) a new entry may be stored for the device type (522). The performance metric information for the particular device type is then available to retrieval and presentation (524) either for future application request to the portal (508) or via a developer query to retrieve all the performance metric information associated with an application. Although the above method is described as performance metric information being provided on a per application basis, the performance metrics may be gathered for multiple applications and provided at the same time to reduce messaging between the device and application portal.

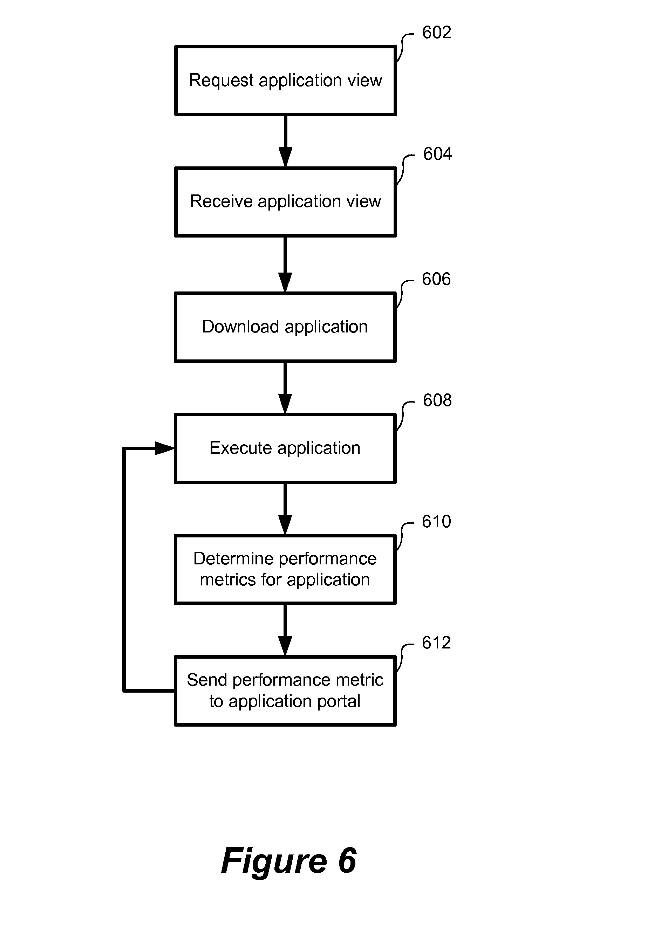

Figure 6 shows a method of performance metric generation performed at a device. The method is executed by one or more processors of the device from instructions stored in a computer readable memory. The device sends a request to the application portal 140 for information associated with a particular application selected by a user (602). The request may include a device type identifier, device identifier or user identifier as well as information to identify an operating system version or bundle version being executed on the device, or this information may be transacted by a separate query mechanism initiated by the application portal 140. In response to the request the application portal 140 provides an application view or information to create a page or view (604) to the device. If performance metric information, ratings and/or data, is available for the device type it is provided by the application portal 140, otherwise aggregate performance information, or no performance information may be provided. The user can the initiate a download of the application (606) to the device from the application portal 140 or a remote storage location identified by the application portal. As part of the application installation process the user may be requested to set permissions or allow performance metrics associated with the application to be periodically provided to the application server or default permissions previously defined on the device may be applied to the application. The application is then executed on the device (608) typically by the user initiating execution however the application may run automatically. The device then periodically determines performance metric data or retrieves performance metrics data for the application (610) through the operating system process monitoring, a dedicated performance service or through the application itself. The performance metric data and/or determine ratings are then sent to the application portal (612) at the defined intervals. The performance metrics may be sent on a per application basis or as an aggregate of multiple applications. Alternatively the application portal may periodically query the device to request performance metrics depending on the configuration of the application portal.

Although certain system, methods, and apparatus are described herein, the scope of coverage of this disclosure is not limited thereto. To the contrary, the present disclosure covers all methods, apparatus, computer readable memory, and articles of manufacture fairly falling within the scope of the appended claims either literally or under the doctrine of equivalents.

## Claims

1. A method of generating application ratings at an application portal, the method when executed by a processor comprising:
receiving (514) from a plurality of devices (102a-102d) performance metrics (150a-150c) associated with an application (120) executed on each of the plurality of devices (1 02a-1 02d) ;
determining (516) a device type associated with each of the plurality of devices (1 02a-1 02d) that sent the performance metrics (150a-150c) to the application portal (140); and
storing (522) the received performance metrics (150a-150c) based upon the determined device type identified in relation to the application.

2. The method of claim1 further comprising:
receiving an application view request for the application from a device;
determining a device type associated with the application view request;
retrieving performance metrics for the application associated with the device type; and
providing the performance metrics to the device.

3. The method of any one of claims1 or 2 wherein the application view comprises identification of an application and identification of one or more performance metrics associated with a particular device type.

4. The method of any one of claims1 to 3 wherein storing the received performance metrics further comprises averaging previously stored performance metrics based on device type with the received performance metrics.

5. The method of any one of claims1 to 4 further comprising determining an operating system associated with the device, wherein the performance metrics are identified by device type operating system.

6. The method of any one of claims1 to 5 wherein the performance metrics comprise one or more of central processing unit (CPU), memory , graphics or network traffic performance metric values.

7. The system of any one of claims1 to 6 wherein the performance metrics further comprises one or more central processing unit (CPU), memory, graphics or network traffic metric ratings.

8. The method of claim7 wherein the performance metrics ratings are presented as a graphic rating scale.

9. The method of any one of claims 1 to 8 further comprising providing a developer view identifying performance metrics collected by the application portal for multiple devices types.

10. The method of any one of claims 1 to 9 wherein receiving performance metrics associated with an application executed on a device is received in a message comprising performance metrics for a plurality of applications executing on a device.

11. The method of any one of claims 1 to 10 wherein the device is wireless device.

12. The method of any one of claims 1 to 11 wherein the device type is further defined by a device model and an operating version.

13. The method of claim 1 to 12 where in the device type is further defined by a manufacturer identifier.

14. A system for application ratings, the system comprising:
a plurality of devices coupled to a network each executing an application;
an application portal coupled to the network performing the method of claims 1 to 13.

15. A computer readable memory comprising instructions which when executed by a processor perform:
receiving from a plurality of devices performance metrics associated with an application executed on each of the plurality of devices;
determining a device type associated with each of the plurality of devices that sent the performance metrics to the application portal; and
storing the received performance metrics based upon the determined device type identified in relation to the application.
